# EUROPEAN PATENT APPLICATION

(11) **EP 4 075 145 A1**
(43) Date of publication of application: **19.10.2022**
(21) Application number: 21168465.9
(22) Date of filing: 14.04.2021
(51) Int. Cl.: G01N 35/04, B01L 3/00, B01L 9/00, G01N 35/10

(54) **SAMPLE COLLECTION APPARATUS AND METHOD FOR PREPARING A PLURALITY OF LIQUID SAMPLES FOR SAMPLE PROCESSING**

(71) Applicant: Scienion GmbH, 12489 Berlin (DE)
(72) Inventor: SETH, Anjali, 69007 Lyon (FR)
(74) Representative: v. Bezold & Partner Patentanwälte - PartG mbB

(57) **Abstract**

A sample collection apparatus, being adapted for preparing a plurality of liquid samples for a sample processing, comprises a collection device comprising a plurality of collection vessels being adapted for accommodating the liquid samples and for providing the liquid samples for the sample processing, wherein the sample collection apparatus is shaped for positioning the collection device directly in a carousel of an autosampler apparatus, in particular a liquid chromatography autosampler apparatus. Preferably, a holder device is provided which is configured for holding the collection device during collecting the liquid samples and during providing the liquid samples for the sample processing, and the holder device is shaped for positioning the holder device with the collection device directly in the carousel of the autosampler apparatus. Furthermore, a sample preparation apparatus including the sample collection apparatus and a sample collection method are described.

## Description

### Technical Field

The present invention relates to a sample collection apparatus and to a sample collection method for preparing a plurality of liquid samples for a sample processing, like e. g. for a mass spectrometry measurement. Furthermore, the invention relates to a sample processing apparatus, including the sample collection apparatus. Applications of the invention are available e. g. in the field of multiplex processing of liquid samples, in particular biological samples, e. g. in proteomics investigations.

### Technical Background

In the present specification, reference is made to the following prior art relating to the technical background of the invention, in particular to preparing cell samples for mass spectrometry:
[1] Zhu, Y. et al. Nanodroplet processing platform for deep and quantitative proteome profiling of 10-100 mammalian cells. Nat. Commun. 9, 882 (2018);
[2] Brunner, A.-D. et al. Ultra-high sensitivity mass spectrometry quantifies single-cell proteome changes upon perturbation. bioRxiv 2020.12.22.423933 (2020) doi:10.1101/2020.12.22.423933;
[3] McAlister, G. C. et al. Increasing the Multiplexing Capacity of TMTs Using Reporter Ion Isotopologues with Isobaric Masses. Anal. Chem. 84, 7469-7478 (2012);
[4] Thompson, A. et al. TMTpro: Design, Synthesis, and Initial Evaluation of a Proline-Based Isobaric 16-Plex Tandem Mass Tag Reagent Set. Anal. Chem. 91, 15941-15950 (2019) ;
[5] Budnik, B., Levy, E., Harmange, G. & Slavov, N. SCoPE-MS: mass spectrometry of single mammalian cells quantifies proteome heterogeneity during cell differentiation. Genome Biol. 19, (2018);
[6] Dou, M. et al. High-Throughput Single Cell Proteomics Enabled by Multiplex Isobaric Labeling in a Nanodroplet Sample Preparation Platform. Anal. Chem. 91, 13119-13127 (2019);
[7] Cong, Y. et al. Ultrasensitive single-cell proteomics workflow identifies >1000 protein groups per mammalian cell. Chem. Sci. (2021) doi:10.1039/DOSC03636F;
[8] Woo, J. et al. High-throughput and high-efficiency sample preparation for single-cell proteomics using a nested nanowell chip. bioRxiv 2021.02.17.431689 (2021) doi:10.1101/2021.02.17.431689;
[9] Williams, S. M. et al. Automated Coupling of Nanodroplet Sample Preparation with Liquid Chromatography-Mass Spectrometry for High-Throughput Single-Cell Proteomics. Anal. Chem. (2020) doi:10.1021/acs.analchem.0c01551;
[10] Specht, H. et al. Single-cell proteomic and transcriptomic analysis of macrophage heterogeneity using SCoPE2. Genome Biol. 22, 50 (2021);
[11] Tyanova, S. & Cox, J. Perseus: A Bioinformatics Platform for Integrative Analysis of Proteomics Data in Cancer Research. in Cancer Systems Biology 133-148 (Humana Press, New York, NY, 2018). doi:10.1007/978-1-4939-7493-1_7;
[12] Hulsen, T., de Vlieg, J. & Alkema, W. BioVenn - a web application for the comparison and visualization of biological lists using area-proportional Venn diagrams. BMC Genomics 9, 488 (2008);
[13] Kyte, J. & Doolittle, R. F. A simple method for displaying the hydropathic character of a protein. J. Mol. Biol. 157, 105-132 (1982);
[14] Schoof, E. M. et al. A Quantitative Single-Cell Proteomics Approach to Characterize an Acute Myeloid Leukemia Hierarchy. bioRxiv 745679 (2019) doi:10.1101/745679;
[15] Goebel-Stengel, M., Stengel, A., Taché, Y. & Reeve, J. R. The importance of using the optimal plastic and glassware in studies involving peptides. Anal. Biochem. 414, 38-46 (2011);
[16] Stejskal, K., Potěšil, D. & Zdráhal, Z. Suppression of Peptide Sample Losses in Autosampler Vials. J. Proteome Res. 12, 3057-3062 (2013);
[17] Kelstrup, C. D. et al. Limits for Resolving Isobaric Tandem Mass Tag Reporter Ions Using Phase-Constrained Spectrum Deconvolution. J. Proteome Res. (2018) doi:10.1021/acs.jproteome.8b00381;
[18] Cheung, T. K. et al. Defining the carrier proteome limit for single-cell proteomics. Nat. Methods 1-8 (2020) doi:10.1038/s41592-020-01002-5;
[19] Tsai, C.-F. et al. An Improved Boosting to Amplify Signal with Isobaric Labeling (iBASIL) Strategy for Precise Quantitative Single-cell Proteomics. Mol. Cell. Proteomics 19, 828-838 (2020);
[20] Specht, H. & Slavov, N. Transformative Opportunities for Single-Cell Proteomics. J. Proteome Res. (2018) doi:10.1021/acs.jproteome.8b00257;
[21] Brenes, A., Hukelmann, J., Bensaddek, D. & Lamond, A. I. Multibatch TMT Reveals False Positives, Batch Effects and Missing Values. Mol. Cell. Proteomics 18, 1967-1980 (2019);
[22] Ctortecka, C. et al. Comparative proteome signatures of trace samples by multiplexed Data-Independent Acquisition. bioRxiv 2021.02.11.430601 (2021) doi:10.1101/2021.02.11.430601;
[23] Uhlén, M. et al. Tissue-based map of the human proteome. Science 347, (2015);
[24] Hartl, M. & Schneider, R. A Unique Family of Neuronal Signaling Proteins Implicated in Oncogenesis and Tumor Suppression. Front. Oncol. 9, (2019);
[25] Yu, F., Haynes, S. E. & Nesvizhskii, A. I. Label-free quantification with FDR-controlled match-between-runs. bioRxiv 2020.11.02.365437 (2020) doi:10.1101/2020.11.02.365437;
[26] Cox, J. et al. Accurate Proteome-wide Label-free Quantification by Delayed Normalization and Maximal Peptide Ratio Extraction, Termed MaxLFQ. Mol. Cell. Proteomics MCP 13, 2513-2526 (2014);
[27] Meier, F. et al. Parallel Accumulation-Serial Fragmentation (PASEF): Multiplying Sequencing Speed and Sensitivity by Synchronized Scans in a Trapped Ion Mobility Device. J. Proteome Res. 14, 5378-5387 (2015); and
[28] European patent application "Apparatus and method for preparing liquid samples for a sample analysis", No. 20194535.9 (not published at the priority date of the present specification).

The analysis of single cell proteomes has recently become a viable complement to transcript and genomics studies. Proteins are the main driver of cellular functionality and mRNA levels are often an unreliable proxy of such, therefore the global analysis of the proteome is essential to study cellular identities. Both multiplexed and label-free mass spectrometry-based approaches with single cell resolution have lately attributed surprising heterogeneity to believed homogenous cell populations. Even though specialized experimental designs and instrumentation have demonstrated remarkable advances, the efficient sample preparation of single cells still lacks behind.

Within recent years single cell analysis has demonstrated valuable insights into heterogeneous populations. However, proteins and especially their post translational modifications are the main driver of cellular identity and their function. The complementation of single cell transcriptomics and genomics approaches with a global protein analysis is therefore regarded essential. Most protein profiling techniques with single cell resolution, however, still rely on the availability of antibodies. Continuous technological advances drive sensitivity and accuracy of mass spectrometry (MS)-based single cell proteomics for hypothesis-free measurements. Despite that, three main aspects, throughput, measurement variability and most importantly sample preparation efficiency still lack behind comparable sequencing techniques.

The combination of dedicated instrumentation with sensitive acquisition strategies for label-free single cell analysis has been demonstrated highly accurate but very limited in throughput ([1],[2]). In label-free MS experiments single cells are processed and subjected to analysis individually, which is not only prone to peptide losses during the workflow and chromatographic separation but also requires about 50 minutes of measurement time per single cell (100 cells in 83 hours).

This problem was addressed through isobaric labeling (i.e. tandem mass tags - TMT), allowing to uniquely barcode individual cells for simultaneous analysis and relative quantification upon MS-based analysis [3]. TMT reagents are available with several multiplexing capacities enabling the analysis of up to sixteen samples in one experiment [4]. This combined analysis not only reduces the measurement time per single cell to merely 5 minutes (i.e. 100 cells in 8 hours) but also increases the input material per sample. For multiplexed experiments, single cells are processed individually, TMT-labeled after tryptic digestion and combined into one sample for MS analysis. The identical mass of the TMT-labels allows for the simultaneous elution of a peptide from all samples, therefore multiplying the precursor signal and contributing ions for peptide identification.

The differently equipped heavy isotopes of the TMT-reagents allow for relative quantification upon fragmentation in the MS. This has been adopted to perform first single cell proteomics experiments, through the combination of single cells with an abundant carrier spike comprised of up to 200 cells (SCoPE-MS) [5]. The abundant carrier sample improves precursor selection, serves fragment ions for identification and overcomes peptide losses throughout the workflow. Such detrimental sample losses during sample preparation were most successfully addressed using the nanoPOTS system (nanodroplet processing in one-pot for trace samples) [1]. Their photolytically etched reaction vessels allow sample volumes reduction to less than 200 nL for both label-free and multiplexed samples [6,7]. Minimizing sample volumes not only reduces peptide losses to vessel surfaces but improves enzymatic kinetics and reduces required chemicals at constant concentration. Previously, most nanoPOTS approaches relied on home built robotic dispensing, which was overcome with the nested nanoPOTS (N2) [8]. Here the cellenONE^{®}, a commercial liquid dispensing robot (manufacturer: Scienion AG, Germany) is used for both cell isolation and further single cell preparation on the N2 substrate to further reduce reaction volume down to about 20 nL. Additionally, the N2 overcomes the need for manual combination of TMT-multiplexed sets using sparsely distributed arrays of single cells reaction sites, which can be unified with a microliter droplet on top of each sample set. They demonstrated the reproducible analysis of TMT-multiplexed single cells in conjunction with an abundant 10 ng carrier sample transferring the combined sample to a vial or their custom built nanoPOTS autosampler [8,9].

It is known from practice that racks and adaptors are commercially available and sold by HPLC/MS companies to accommodate commercially available vials or 96 or 384 well plates. These racks are conventionally used for accommodating the vials or well plates after receipt of the liquid samples therein. Accordingly, with employing the conventional racks and adaptors, the vials or well plates are filled with the samples in a first step, followed by setting the vials or well plates to the rack or adaptors and introducing the rack or adaptor into the autosampler for further processing.

The conventional techniques still have limitations in terms of sample preparation efficiency, throughput, evaporation loss and liquid sample handling errors. The above problems do not occur in preparing samples for mass spectrometry only, but also with other tasks of collecting liquid samples for subsequent sample processing.

### Objective of the Invention

The objectives of the invention are to provide an improved sample collection apparatus and sample collection method, being capable of avoiding disadvantages or limitations of conventional techniques. In particular, sample collection is to be provided with improved efficiency, improved throughput, reduced handling errors, and/or minimized or avoided evaporation problems. According to further aspects, the sample collection apparatus is to be configured as user-friendly as possible and/or adapted for the whole process chain of a sample preparation, e. g. for mass spectrometry, in particular allowing an automation of the sample preparation.

### Summary of the invention

The above objectives are respectively solved by a sample collection apparatus, a sample processing apparatus and a sample collection method, comprising the features of the independent claims. Features of preferred embodiments and applications of the inventions are defined in the dependent claims.

According to a first general aspect of the invention, the above objective is solved by a sample collection apparatus, being adapted for preparing a plurality of liquid samples for a sample processing. The sample collection apparatus comprises a collection device comprising a plurality of collection vessels being adapted for accommodating the liquid samples and for providing the liquid samples for the sample processing. According to the invention, the sample preparing apparatus is shaped for positioning the collection device directly in a carousel of an autosampler apparatus, in particular a liquid chromatography autosampler apparatus.

According to a second general aspect of the invention, the above objective is solved by a sample collection method for preparing liquid samples for sample processing, in particular for liquid chromatography sample separation. The sample collection method comprises the steps of collecting the liquid samples with a collection device comprising a plurality of collection vessels each being adapted for accommodating one of the liquid samples and for providing the liquid samples for the sample processing, and positioning the collection device directly in a carousel of an autosampler apparatus, in particular a liquid chromatography autosampler apparatus. Preferably, the sample collection method or an embodiment thereof is executed by the sample collection apparatus of the first general aspect of the invention or an embodiment thereof.

According to a third general aspect of the invention, the above objective is solved by a sample preparation apparatus, comprising a sample collection apparatus of the first general aspect of the invention or an embodiment thereof, and an autosampler apparatus, in particular a liquid chromatography autosampler apparatus, e. g. for mass spectrometry.

According to a fourth general aspect of the invention, the above objective is solved by using a sample collection apparatus of the first general aspect of the invention or an embodiment thereof for preparing liquid samples before sample processing with a liquid chromatography autosampler apparatus, in particular for mass spectrometry analyses.

Advantageously, the sample collection apparatus (also called proteoCHIP) provides a universal option in particular for single cell proteomics sample preparation at remarkable sensitivity and throughput. If the liquid samples to be processed are prepared with an automated processing using a commercial system combining single cell isolation and picoliter dispensing, like the cellenONE^{®}, final sample volumes can be reduced to low nanoliters and possibly submerged in a hexadecane layer simultaneously eliminating error prone manual sample handling and overcoming evaporation. The invention essentially facilitates the handling of those low sample volumes. With the inventive method, around 1,000 protein groups are achieved per analytical run while reducing or eliminating the carrier proteome at substantial reporter ion signal to noise. The inventors identified with the application of the inventive technique close to 2,000 protein groups across 110 multiplexed single cells from two highly similar human cell types and clustered them based on their proteome. In-depth investigation of regulated proteins readily identified one of the main drivers for tumorigenicity in this cell type. The inventive technique is compatible with all labeling reagents, can be easily adapted to custom workflows and further is a viable option for label-free sample preparation. The specialized design of the sample collection apparatus allows for the direct injection of label-free single cells via a standard autosampler resulting in the recovery of 30% more protein groups compared to samples transferred to PEG coated vials. Therefore, the versatile, sensitive, and automated sample preparation workflow of the invention will be easily adoptable by non-specialized users and will drive biological applications of single cell proteomics.

The invention provides a highly versatile and automated workflow for label-free and/or isobaric multiplexed single cell proteomics sample preparation at unprecedented sensitivity. The inventors introduce the sample collection apparatus encompassing e. g. sixteen nanowells for cross-contamination-free simultaneous processing of up to 192 single cells per chip. The sample collection apparatus overcomes all manual sample handling steps including the combination of multiplexed sample sets and can be directly interfaced with standard autosamplers for MS-based analysis. The nanowells allow to reduce final sample volumes to about 200 nL for efficient processing while overcoming evaporation entirely. Further, the sample collection apparatus can be used with all currently available multiplexing reagents or for the efficient processing of label-free single cells. Finally, the inventive method allows to reduce the carrier spike to a minimum for accurate quantification while yielding comparable protein identifications to published techniques [8,10].

Advantageously, the inventive technique prevents having to manually transfer (using a hand pipette) each of the samples after their preparation for proteomics analysis (cell lysis, protein digestion, (optional peptide labelling using isobaric labels) and quenching). Being able to directly aspirate into the liquid chromatography system without having to go through manual pipetting step reduces peptide losses on the pipette tip or other container surfaces which leads to much improved results (up to 30% more protein/peptide detected). The invention also brings an element of practicality for the user as it avoids operator error and reduces the number of manual step required prior to sample injection.

The invention works by matching the dimensions and positions preset into the autosampler with the dimension of the different wells of the collection device and positioning those into the carousel using the holder. In particular, the shape (geometry and dimensions) of the sample collection apparatus is adapted to the shape of receptacles preset in the autosampler. Additional racks or adaptors are not required. Furthermore, no reprogrammation of the autosampler positions are required (this is typically not possible) and the collection device can seamlessly be interfaced with existing commercial autosamplers.

The term "autosampler apparatus" refers to a device that is coupled to an analytical instrument providing samples for analysis. The autosampler apparatus is a device that collects samples from a sample source provided by the collection device. Usually, the autosampler apparatus is coupled with an automated machine or robotic device for sample processing, e. g. sample analysis, like mass spectrometry or other analytic methods. Generally, an autosampler apparatus has a carousel and a sampling portion, like a sampling or aspiration needle. The carousel holds the samples, and revolves around its center so that samples change their horizontal position. With available autosampler apparatuses, the carousel has receptacles for accommodating racks or adaptors. With the invention, the sample collection apparatus is shaped such that it directly matches to the receptacles of the autosampler carousel. Examples of autosampler apparatuses are WPS-3000PL (RS) and WPS-3000FC of Thermo Scientific Dionex UltiMate 3000 Series (manufacturer: Thermo Fisher Scientific Inc., USA). However, the invention is not restricted to these examples but can be employed with other autosampler apparatuses as well.

Advantageously, the invention provides a recovery apparatus (collection device including collection vessels, e. g. funnels) that is designed to match positions of e. g. a 96 well plate and associated holders to match the height required in an LC-MS/MS instrument. The invention allows directly interfacing the sample collection apparatus with the LC-MS autosampler part, so that no more pipetting steps of the sample prior to LC injection are necessary. The samples can be transferred directly from the sample collection apparatus to the LC-autosampler.

The sample collection apparatus may consist of a single component providing the collection device. In this case, the outer shape of the collection device is adapted to the shape of the autosampler apparatus. Preferably, the sample collection apparatus comprises a holder device being configured for holding the collection device during collecting the liquid samples and during providing the liquid samples for the sample processing, and the holder device is shaped for positioning the holder device with the collection device directly in the carousel of the autosampler apparatus. Particularly preferred, a bottom side of the holder device has an outer shape of a sample rack of the autosampler apparatus. Advantageously, this facilitates sample processing, e. g. in the collection device, before sample collection.

According to a preferred embodiment of the invention, the holder device is made of a material with a thermal conductivity being matched to the thermal conductivity of a metal, in particular of aluminum or stainless steel. Advantageously, this allows the temperature set in the autosampler apparatus to be propagated to the collection device and the samples it contains prior to their analysis.

According to a further preferred embodiment of the invention, the holder device has a substrate section being adapted for accommodating the collection device and a lid section being adapted for covering the collection device accommodated on the substrate section. Preferably, the lid section has a thickness allowing puncturing by a sampling needle of the autosampler apparatus. The lid section can be provided a. g. by a foil, like an aluminum or plastics foil.

Preferably, the sample preparing apparatus, in particular the holder device, has at least two receptacles being adapted for receiving coupling elements of the autosampler apparatus. In particular, at least two holes are provided that are fitting two pillars in the caroussel of the autosampler apparatus that are there to block/prevent the adaptors from moving in order to keep a stable position for the samples to be programmed/uptaken and analysed.

According to further variants of the invention, the collection device has an outer size of a standard microscopy glass slide or a microtiter plate. Particularly preferred, the collection device is configured as described in [28] which is introduced to the present disclosure by reference. In particular, all features of the sample preparing apparatus disclosed in [28], the operation and application thereof are introduced to the present disclosure by reference. Advantageously, the collection device may have specific dimensions and is used to collect liquid preparation after undertaking single/low amount cell/protein sample preparation for single cell proteomic analyses.

Features disclosed in the context of the sample collection apparatus and the embodiments thereof also represent preferred features of the inventive sample collection method and the embodiments thereof, and vice versa. The aforementioned aspects and inventive and preferred features, in particular with regard to the configuration of the sample collection apparatus as well as the dimensions and compositions of individual components which have been described in relation to the sample collection apparatus, therefore also apply for the method. The preferred embodiments, variants and features of the invention described above are combinable with one another as desired.

Process steps of the tests described below are considered to represent independent subjects of the present invention, which are claimed in combination with the sample collection apparatus and method or independently therefrom.

### Brief description of the drawings

Further advantages and details of the invention are described in the following with reference to the attached drawings, which schematically show in:
- Figures 1 and 2:: top and cross-sections views of collections devices of a sample collection apparatus according to embodiments of the invention;
- Figures 3 to 6:: top and side views of holder devices of a sample collection apparatus according to embodiments of the invention;
- Figure 7:: an illustration of the proteoChipproteoCHIP based TMT-labeling workflow. Up to sixteen nanowells/single cells per TMT set are prepared inside the cellenONE^{®}, are automatically combined via centrifugation and directly interfaced with a standard autosampler for loss-less acquisition;

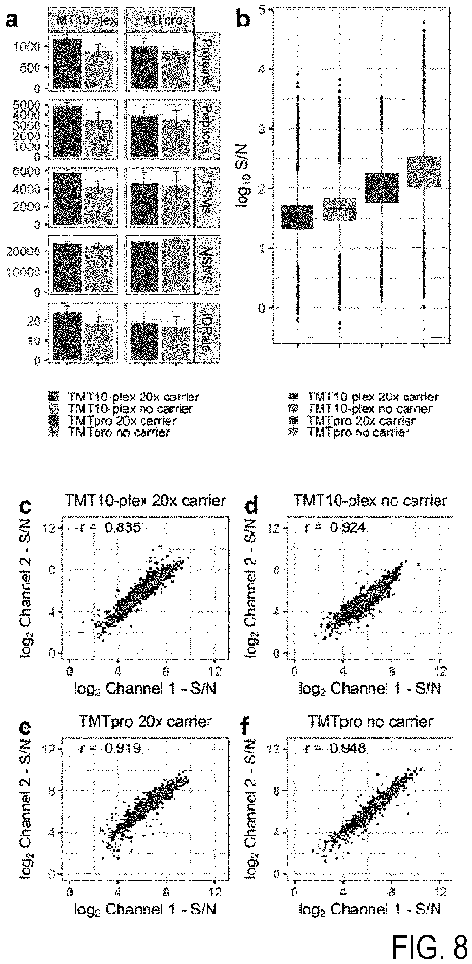

- Figure 8:: an illustration of an application of the proteoCHIP for single cell proteomics sample preparation with TMT10-plex and TMTpro reagents at different carrier compositions. (a) Number of identified proteins, peptides, PSMs, all MS/MS scans and the ID rate for TMT10-plex (red) and TMTpro (green). Error bars represent median absolute deviation. (b) Log₁₀ S/N of all single cell reporter ions at indicated condition over five replicates. Log₂ S/N correlation between two single cell samples for (c) TMT10-plex 20x carrier, (d) TMT10-plex no carrier, (e) TMTpro 20x carrier and (f) TMTpro no carrier. r = Pearson correlation estimate.;

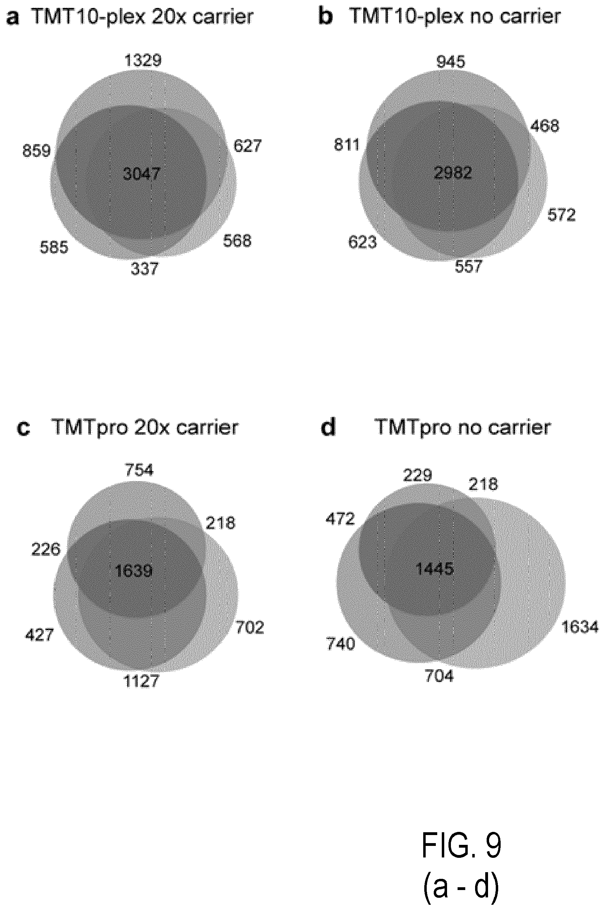

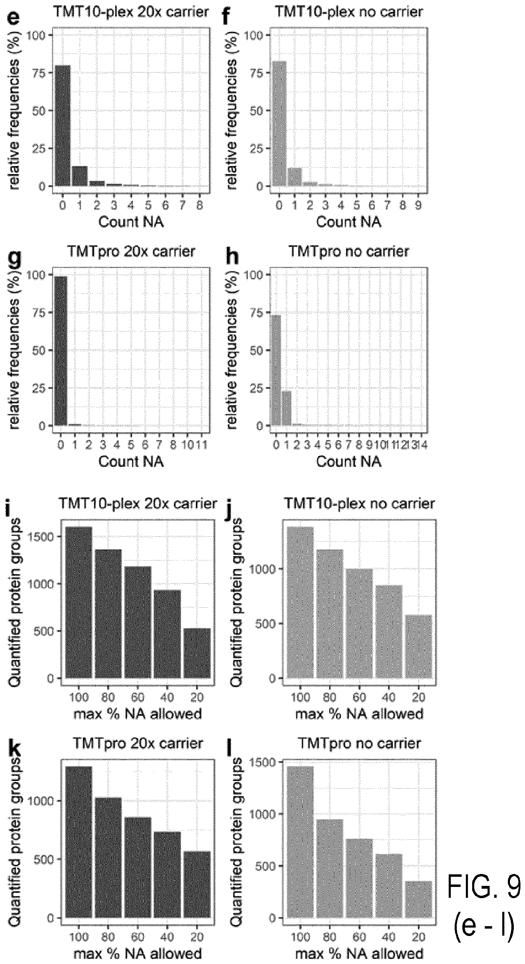

- Figure 9:: an illustration of data completeness and reproducibility evaluation of multiplexed single cell proteomes. Unique peptide sequence overlaps for (a) TMT10-plex 20x carrier, (b) TMT10-plex no carrier, (c) TMTpro 20x carrier and (d) TMTpro no carrier samples. Percentage of relative missing reporter ions across five analytical runs per PSM for (e) TMT10-plex 20x carrier, (f) TMT10-plex no carrier, (g) TMTpro 20x carrier and (h) TMTpro no carrier samples. Cumulative missing quantitative data across five analytical runs for (i) TMT10-plex 20x carrier, (j) TMT10-plex no carrier, (k) TMTpro 20x carrier and (I) TMTpro no carrier samples.;

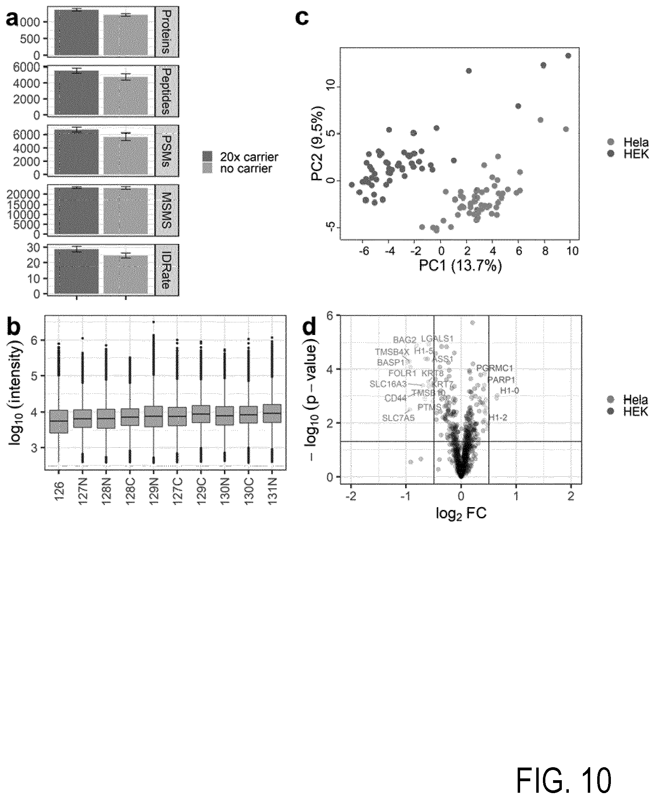

- Figure 10:: a comparison of HeLa and HEK single cell proteomes. (a) Protein groups, peptides, PSMs, MS/MS scans and ID-rate of TMT10-plex HeLa/HEK samples. (b) Intensity distribution of all reporter ions for both HeLa and HEK single cells across several analytical runs in log₁₀ (n=11). (c) PCA clustering of single HeLa (blue) and HEK (red) TMT10-plex labeled 110 single cells across 976 protein groups. (d) Vulcano plot of differential expressed proteins between HeLa and HEK single cells. Log₂ fold change and -log₁₀ p-value is shown. Colors indicate protein regulation and top up- or down regulated proteins are labeled with their gene names;
- Figure 11:: an illustration of a Label-free proteome analysis of single HeLa cells. (a) Protein groups of indicated cell numbers via direct injection from the funnel (red) or transferred to a standard PCR vial (blue). (b) Protein groups, peptides, PSMs, all MS/MS scans and the ID-rate of label-free single cells (n=32). Error bars represent median absolute deviation. (c) Unique peptide sequence overlap of three labelfree single HeLa measurements. (d) Label-free protein quantification correlation of two analytical runs in log₂. r = Pearson correlation estimation.;
- Figure 12:: Gravy index of hydropathy of bulk HeLa digest (bulk), in-silico digested human FASTA (in-silico), HeLa cells prepared in standard plasticware (PP), the proteoCHIP (PTFE) and prepared in the proteoCHIP but transferred to a standard PCR vial for injection (Transfer) across all PSMs; and
- Figure 13:: an image of a HEK and a HeLa cell during image-based cell sorting using the cellenONE^{®}.

### Description of preferred embodiments

Features of preferred embodiments of the invention are described in the following with exemplary reference to sample preparation for the LC-MS/MS analysis. It is emphasized, that the application of the invention is not restricted to this embodiment, but correspondingly possible with other analyses, e. g. by using other samples and reagents. Furthermore, while the sample preparing apparatus is schematically shown, details, like e. g. the number, shape and size of the arrays and reactions sites and/or the number, shape and size of the collection device(s) can be modified in dependency on the particular applications conditions. Details of the sample processing for proteomics investigations are not described as far as they are known per se from conventional techniques. Exemplary reference is made to the use of a collection device as described in [28]. The invention is not restricted to this embodiment, but can be implemented in a corresponding manner with other configurations of collection devices, e. g. having the shape of a micro-titer plate or a nano-titer plate.

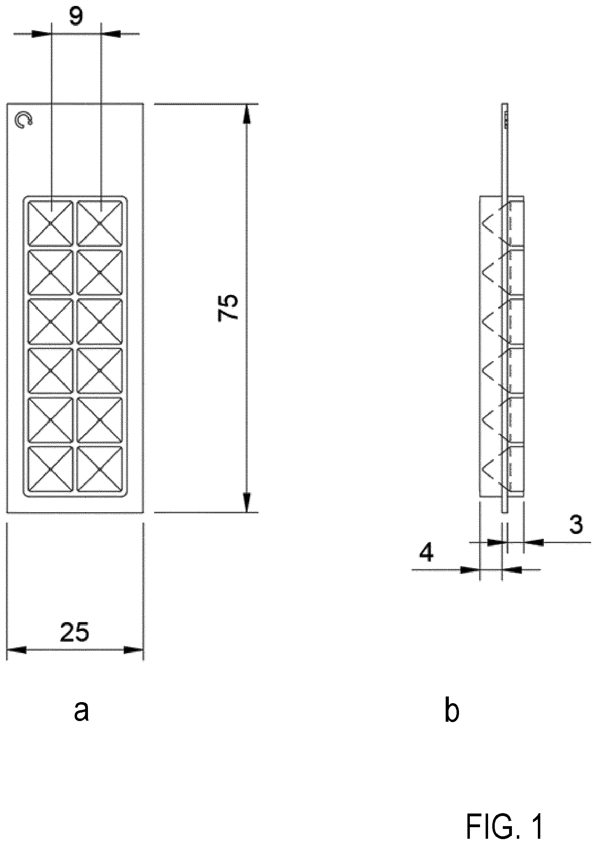

Figures 1a and 1b illustrate a collection device as disclosed in [28]. Twelve collections vessels each with a vessel opening and a vessel bottom are arranged for accommodating liquid samples. As shown in Figure 1b, the collections vessels have an inner shape with a pyramid-shaped or cone-shaped bottom section and a cube shaped upper section. The size of 75 ^{∗} 25 mm corresponds to the standard size of a microscopy slide glass.

As described in [28], the collection device can be combined with a carrier plate device with an array of reaction sites, wherein the carrier plate device is configured for accommodating the samples and supplying reagents to the liquid samples. The reaction sites can be preloaded with at least one of an organic solution, in particular an oil, and an organic and/or aqueous solution for lysis and/or digestion steps. Preloading with an oil may prevent evaporation of the subsequent aqueous droplets.

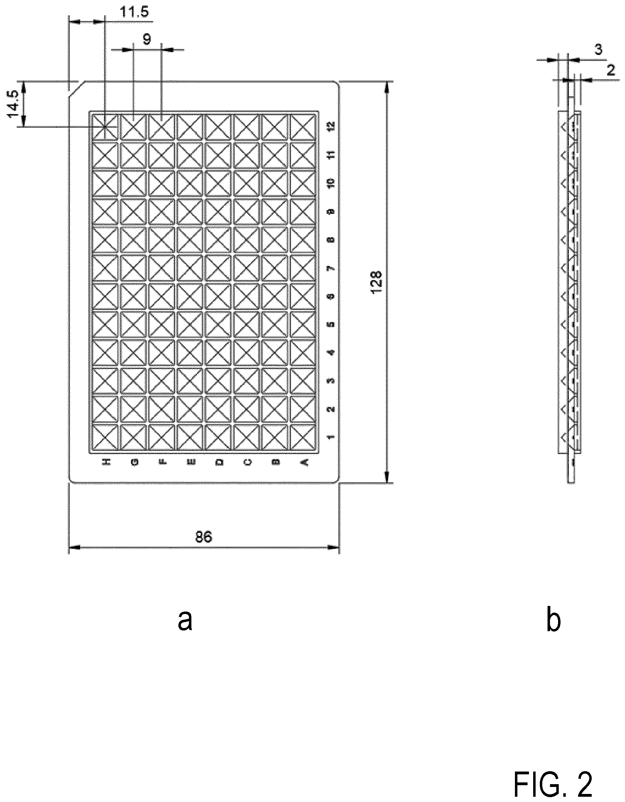

Figures 2a and 2b illustrate an alternative collection device being shaped like a standard 96 well microtiter plate. 96 collections vessels each with a vessel opening and a vessel bottom are arranged for accommodating liquid samples. Again, as shown in Figure 2b, the collections vessels have an inner shape with a pyramid-shaped or cone-shaped bottom section and a cube shaped upper section.

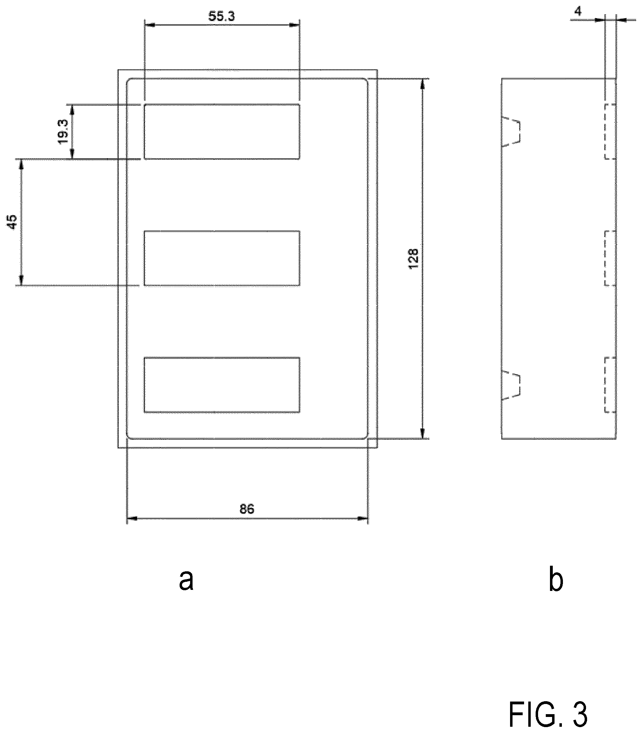

Figures 3a and 3b illustrate a holder device being configured for holding three collection devices according to Figure 1. On an upper side (right side in Figure 3b), the holder device has three receptacles for accommodating the collection devices. On a lower side (left side in Figure 3b), the holder device has two holes for accommodating pillars of a carousel of an autosampler apparatus (not shown).

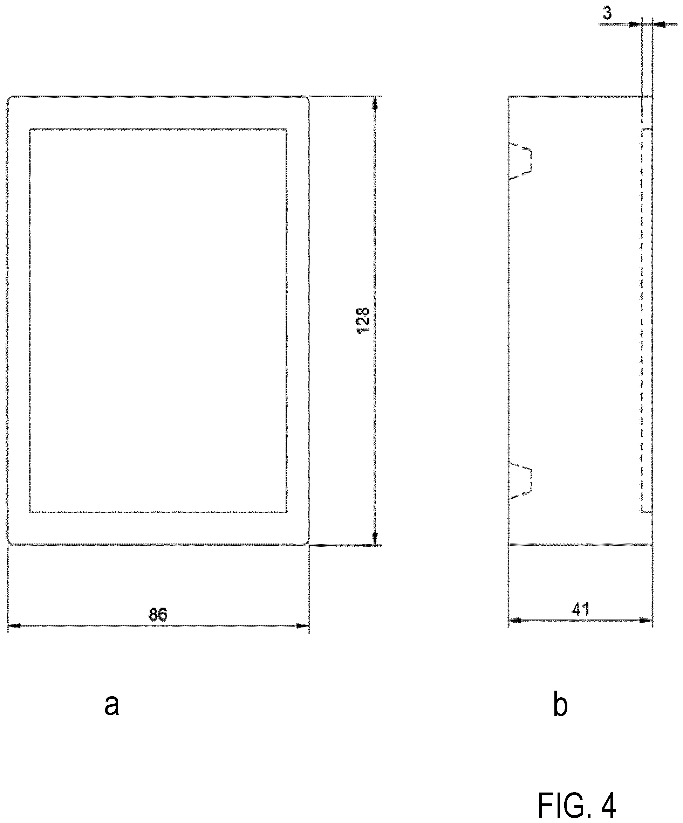

Figures 4a and 4b illustrate a holder device being configured for holding one collection device according to Figure 2. On an upper side (right side in Figure 4b), the holder device has one receptacles for accommodating the collection device. On a lower side (left side in Figure 4b), the holder device has two holes for accommodating pillars of a carousel of an autosampler apparatus (not shown).

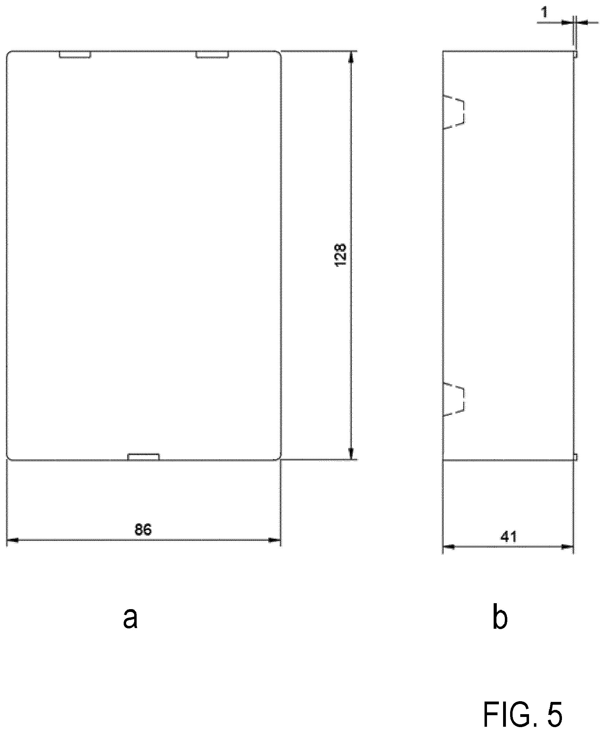

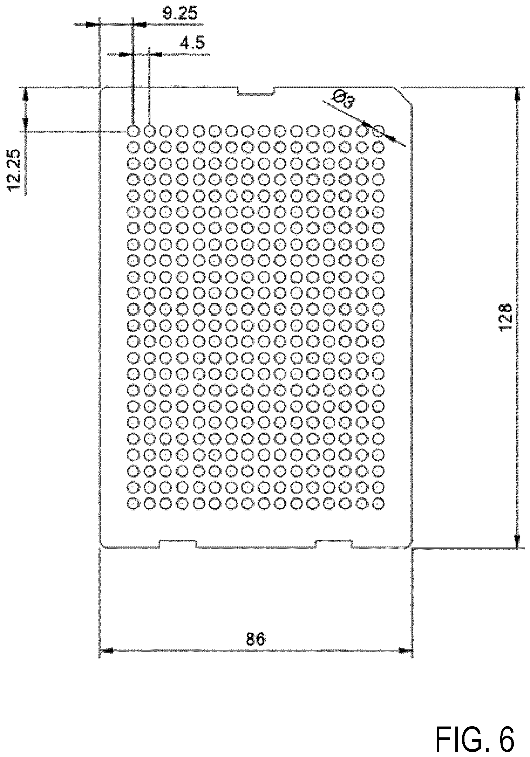

While Figures 1 to 4 refer to examples wherein the sample collection apparatus has two components, comprising the collection device and the holder device, the sample collection apparatus may be configured with a single component functioning as the collection device accommodating the sample and the holder device matching with the carousel of an autosampler apparatus, as shown in Figure 5 and 6. Figure 5 shows the sample collection apparatus with a lid covering all collection vessels, and Figure 6 shows the collection vessels being arranged like in a 96 well microtiter plate.

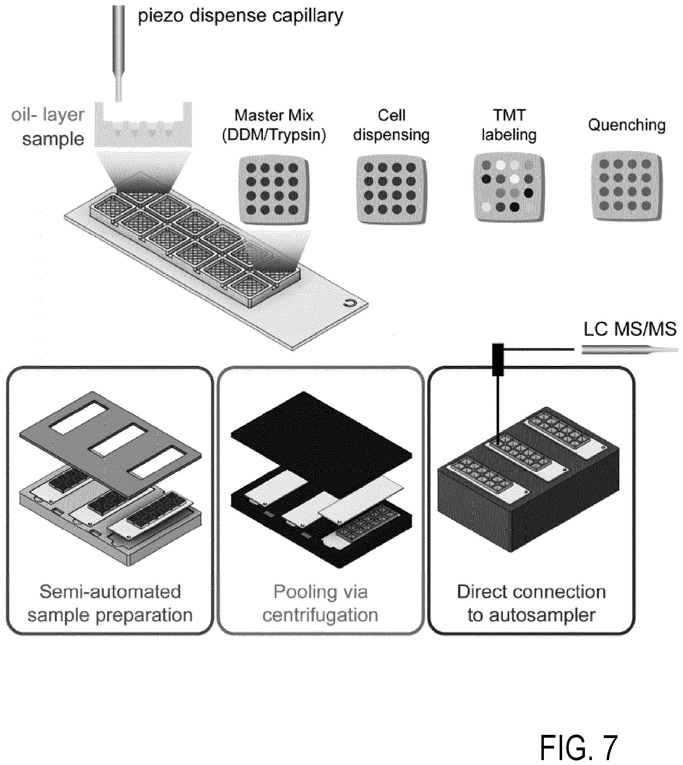

Figure 7 illustrates sample handling with the embodiment of Figure 1, as described with further details in [28], and the direct connection of the sample collection apparatus with the autosampler apparatus.

In the following practical tests of the inventive technique are described with reference to Figures 7 to 12.

### Sample preparation

HeLa and HEK293T cells were cultured at 37 °C and 5% CO2 in Dulbecco's Modified Eagle's Medium supplemented with 10% FBS and 1x penicillin-streptomycin (P0781-100ML, Sigma-Aldrich, Israel) and L-Glut (25030-024, Thermo Scientific, Germany). After trypsinization (0.05% Trypsin-EDTA 1x, 25300-054, Sigma-Aldrich, USA/Germany), cells were pelleted, washed 3x with phosphate-buffered saline (PBS) and directly used for single cell experiments.

40-200 nL lysis buffer (0.2% DDM (D4641-500MG, Sigma-Aldrich, USA/Germany), 100 mM TEAB (17902-500ML, Fluka Analytical, Switzerland), 20 ng/µL trypsin (Promega Gold, V5280, Promega, USA) was dispensed into each well using the cellenONE^{®} (Cellenion, France) at high humidity. After single cell deposition (gated for cell diameter min 22 µm and diameter max 33 µm, circularity 1.1, elongation 1.84) a layer of Hexadecane (H6703-100ML, Sigma-Aldrich, USA/Germany) was added to the chips. The chip was then incubated at 50 °C for 30 minutes followed by 4 hrs at 37 °C, directly on the heating deck inside the cellenONE^{®}. For TMT multiplexed experiments 100-200 nL of 22 mM TMT10-plex or TMTpro in anhydrous ACN was added to the respective wells and incubated for 1 hour at room-temperature. TMT was subsequently quenched with 50 nL 0.5 % hydroxylamine (90115, Thermo Scientific, Germany) and 3 % HCI followed by sample pooling via centrifugation using the proteoCHIP funnel part. After tryptic digest, label-free samples were quenched with 0.1% TFA and both label-free or multiplexed samples were either transferred to 0.2 mL PCR-tubes coated with 1e-3 % Poly(ethylene glycol) (95172-250G-F, Sigma-Aldrich, Germany), directly injected from the proteoCHIP funnel part or kept at -20 °C until usage.

### LC-MS/MS analysis

Samples were measured on a Orbitrap ExplorisTM 480 Mass Spectrometer (Thermo Fisher Scientific) with a reversed phase Dionex Thermo Fisher Scientific UltiMate 3000 RSLC-nano high-performance liquid chromatography (HPLC) RSLCnano system coupled via a Nanospray Flex ion source equipped with FAIMS (operated at -50 CV). Labeled peptides were first trapped on an AcclaimTM PepMapTM 100 C18 precolumn (5 µM, 0.3 mm X 5 mm, Thermo Fisher Scientific) and eluted to the analytical column nanoEase M/Z Peptide BEH C18 Column (130Å, 1.7 µm, 75 µm X 150 mm, Waters, Germany) developing a two-step solvent gradient ranging from 2 to 20% over 45 min and 20 to 32% ACN in 0.08 formic acid within 15 min, at a flow rate of 250 nL/min. Label-free samples were measured on the same setup as described above but separated using a two-step gradient from 2 to 20% over 15 min, 20 to 32% ACN in 0.08 formic acid within 5 minutes, at 250 nL/min.

Full MS data of multiplexed experiments were acquired in a range of 375-1,200 m/z with a maximum AGC target of 3e6 and automatic inject time at 120,000 resolution. Top 10 multiply charged precursors (2-5) over a minimum intensity of 5e3 were isolated using a 2 Th isolation window. MS/MS scans were acquired at a resolution of 60,000 at a fixed first mass of 110 m/z with a maximum AGC target of 1e5 or injection time of 118 ms. Previously isolated precursors were subsequently excluded from fragmentation with a dynamic exclusion of 120 seconds. TMT10-plex precursors were fragmented at a normalized collision energy (NCE) of 34 and TMTpro at a NCE of 32.

### Data analysis

Peptide identification was performed using the standard parameters in SpectromineTM 2.0 against the human reference proteome sequence database (UniProt; version: 2020-10-12). N-terminal protein acetylation and oxidation at methionine were set as variable modifications and the respective TMT reagents were selected as fixed modification. PSM, peptide and protein groups were filtered with a false discovery rate (FDR) of 1%. S/N levels of reporter ions were extracted using the in-house developed Hyperplex (freely available: pd-nodes.org) at 10 ppm and intersected with the SpectromineTM results. Post-processing was performed in the R environment. Single cell reporter ion intensities are normalized to their sample loading within each analytical run. For HeLa HEK clustering, the raw reporter ion intensities were log2 transformed, protein groups with less than 70% missing data across the entire dataset were imputed with random values from a normal distribution shifted into the noise. The reporter ion intensities were then quantile normalized, batch corrected using ComBat for the analytical run and the TMT channel using the Perseus interface.11 Venn Diagrams are based on unique peptide sequences and are calculated using BioVenn.12 GRAVY scores were calculated for every unique peptide sequence identified from the respective condition, based on the Amino Acid Hydropathy Scores.13

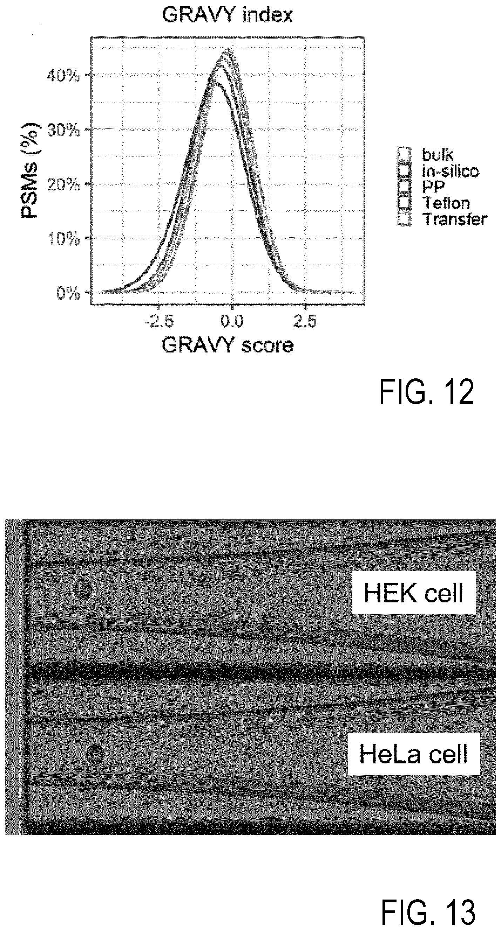

The inventors tested the inventive sample collection apparatus for automated single cell proteomics sample preparation within a platform combining single cell isolation and picoliter dispensing, the cellenONE^{®}, for both label-free and multiplexed samples. The sample collection apparatus is a complete system in the size of standard microscopy slides that is constituted of two parts. First, the carrier plate device (well part) is where the single cell isolation and sample preparation takes place and, secondly, the collection device (funnel part) is where the samples can be combined before direct interfacing for injection in the LC autosampler. The first part entails twelve fields to process twelve label-free single cells or twelve multiplexed sample sets with up to sixteen cells per set (total 192 cells) (Figure 7, see [28]). The carrier plate device has four main advantages over other published sample preparation workflows [8-10,14]. First, to overcome known peptide losses to plastic or glass ware [15,16] the proteoCHIP is fabricated out of PTFE or a plastics material having properties like PTFE. Despite the similar GRAVY indices of samples analyzed in bulk, from the PTFE sample collection apparatus, after transfer to a PP vessel or preparation in PP plates (Figure 12), the inventors regularly observe beneficial peptide recovery from samples processed in PTFE . Second, the nanowells within each field hold up to 600 nL allowing to readily adapt the sample preparation protocol without cross-contamination of the samples. Third, in contrast to successfully miniaturized sample preparation strategies 1 the inventors overcome sample evaporation with a hexadecane layer (Figure 7). Hexadecane freezing point is close to 18 °C, the oil covering the final sample in the 10 °C autosampler therefore freezes and does not interfere with the subsequent analysis. This results in constant reagent and enzyme concentrations in relation to the cells for reproducible processing efficiencies. Additionally, all fields are surrounded by elevated walls, physically separating each sample set during the workflow and storage in the autosampler. Fourth, the proteoCHIP funnel part allows convenient polling of multiplexed single cell samples using a standard benchtop plate centrifuge (Figure 7). In contrast to the N2 workflow where nested single cells are elegantly combined via the addition of a drop of sample buffer,8 the proteoCHIP funnel part can be directly interfaced with a standard autosampler. This allows for direct injection of the samples without drying or transferring them to another vessel (Figure 7). Taken together, the reduction in processing volumes, manual sample handling and exposed surface areas combined with the direct interface to a standard autosampler attain single cell proteome measurements at remarkable sensitivity.

### Single cell proteomics sample preparation workflow with the sample collection apparatus

The inventors performed the entire sample preparation workflow inside the cellenONE^{®} starting with dispensing of a master mix for lysis and enzymatic digestion followed by image-based single-cell isolation, where cells are directly dispensed in the master mix. We use a combination of a MS compatible detergent to ensure efficient lysis with simultaneous tryptic digestion at a 10:1 enzyme:substrate ratio. Lysis and digestion incubation steps at 50 and 37 °C are performed at high humidity (i.e. 85%) while the sample is submerged under a hexadecane layer to overcome evaporation (detailed in the method section). Subsequent steps are performed at dew point to further reduce sample evaporation and residual enzymatic activity during the labeling. Afterwards, excess TMT is quenched with hydroxylamine and hydrochloric acid to avoid drastic changes in pH. Of note, this protocol allows for a final sample volume after lysis, digestion, TMT-labeling and quenching of sub-microliter without drying the sample to completeness. Subsequently, the proteoCHIP is covered with proteoCHIP funnel part, pooled in a centrifuge within only a minute, covered with adhesive aluminum foil, which can be easily pierced by the HPLC puncturer and finally injected for LC-MS/MS analysis (illustrated in Figure 7).

Multiplexed single cell proteome measurements.

First, the inventors evaluated the required abundance of the carrier spike for comparable protein identifications to state of the art techniques [8,10]. The optimized workflow using the sample collection apparatus with reduced sample volume, manipulation and surface area exposure allows to reduce the carrier to merely 20x or lower, yielding around 1,000 protein groups per analytical run (Figure 8a). This ratio reduction of the carrier to single cells close to the reported ratio limit of TMT10-plex reagents improves quantification accuracy [17,18]. In detail, the inventors readily identify on average 1,175 and 897 protein groups based on 4,832 and 3,444 peptides per multiplexed TMT10-plex set using a 20x carrier or no carrier, respectively (Figure 8a). All TMT10-plex single cell runs combined (i.e. 306 single cells) yield over 2,023 protein groups based on 13,601 peptides. Similarly, the 20x and no carrier TMTpro samples (i.e. 276 single cells) result in an average of 1,017 and 924 protein groups from 3,873 and 3,833 peptides per analytical run, respectively (Figure 8a). Across all TMTpro single cell sets, the inventors identify over 2,016 protein groups from 12,180 peptides. This indicates that the inventors find multiple protein groups uniquely in some analytical runs and not across all replicates for both TMT reagents. Nevertheless, our specialized workflow resulted in highly comparable identifications for both TMT reagents and with the reduced or omitted carrier.

Recently, Cheung and co-workers proposed a signal to noise (S/N) filtering for more accurate quantification of multiplexed single cell proteomics experiments [18]. The inventors therefore extracted the S/N value of all single cell channels using our in-house software Hyperplex (details in method section) and evaluated the S/N distribution for our experimental setup. The average single cell S/N in all conditions from cells prepared with the sample collection apparatus on the instrument setup well compares or outperforms previous reports. In detail, the inventors observed median single cell reporter ion S/N values of 40 and 100 for TMT10-plex samples or 133 and 255 for TMTpro samples, with and without the 20x carrier, respectively (Figure 8b). Despite being acquired on different instruments, the setup and the carrier reduction vastly improves S/N reporter values compared to 7-15 S/N of the nanoPOTS or N2 [6,8,19].

Interestingly, TMTpro experiments with and without the carrier resulted in higher S/N of the single cell channels compared to the TMT10-plex (Figure 8b). the inventors have regularly observed this phenomenon in trace samples and speculate, that this is due to the reduced NCE needed to fragment the TMTpro over the TMT10-plex reagent. The TMTpro NCE of 32 efficiently fragments the tag and is close to the energy required for fragmentation of the peptide backbone. This contrasts with the slightly higher NCE of 34 required to suitably fragment the TMT10-plex tag, possibly increasing the noise level in each MS/MS scan. Furthermore, the inventors observed a reduction by 50% in single cell S/N in the 20x carrier compared to the no-carrier samples, for both TMT10-plex and TMTpro experiments (Figure 8b). Despite the low ratio of the carrier to the single cells, the inventors speculate that this is due to the increased proportion of ions sampled from the carrier [18] or compression of the single cell reporter ion signals into the noise. Additionally, a pairwise correlation of two single cell reporter ion channels demonstrates increased variance between the 20x carrier compared to the no carrier samples for both TMT10-plex and TMTpro (Figures 8c-f). Despite the obvious beneficial aspects of a carrier spike20, based on our findings, the inventors agree with literature to reduce the carrier to a minimum or if possible, remove it entirely from the TMT set [6,18].

Next, based on the presumed low identification overlap between analytical runs (i.e. biological replicates), the inventors evaluated the unique peptide sequence intersections and percentage of missing data within our single cell runs. Interestingly, the inventors observed less overlap in unique peptide sequences for the TMTpro compared to TMT10-plex samples for 20x and no carrier setups, ranging from 50 to 85% (Figure 9a-d). The inventors found that both, the stochastic precursor selection of the employed data dependent acquisition (DDA) strategy and the direct injection of the sample after TMT labeling without a cleanup compromise reproducibility. Furthermore, the inventors speculate that nearly double the TMT reagent in the final TMTpro compared to the TMT10-plex sample, contributes background signal, interferes with precursor selection and MS/MS identification, additionally decreasing peptide sequence overlap (Figure 9a-d). Accordingly, the inventors evaluated both the missingness of reporter ion signal per PSM and the cumulative missing data across multiple analytical runs. The high reporter ion S/N already suggested that the signal of our single cells is well above the noise therefore resulting in almost no missing values per PSM for all experimental setups (Figure 9e-h). Even with the low missingness per analytical run, the high variance between analytical runs leads to cumulative missing quantitative data (Figures 9i-l). The data aggregation of five analytical runs (i.e. about 50-80 single cells) reduces the number of confidently quantified proteins by 50% without imputation (Figures 9i-l), as reported by others [8,10]. This demonstrates that despite the high quality quantitative data per analytical run, the untargeted data dependent acquisition (DDA) results in accumulation of missing data in large sample cohorts [21,22]. As a result the acquired dataset is either drastically reduced or a large proportion of quantitative data is computationally generated.

Differentiating two similarly sized human cell types based on their single cell proteome.

Following the surprising data quality stemming from our optimized sample preparation workflow, the inventors tested if two similarly sized human cell types can be differentiated based on their proteome (Figure 13). The inventors used 110 HeLa and HEK single cell samples using the inventive workflow and distributed them equally across eleven TMT10-plex sets. Both, the 20x carrier and no carrier samples yield on average around 1,300 protein groups based on 5,000 peptides per analytical run (Figure 10a). Further, the inventors confirmed that the similarly sized cells contain similar protein amounts, resulting in equally distributed reporter ion intensities in all TMT10-plex channels across multiple analytical runs (Figure 10b). This not only indicates highly reproducible sample preparation but also strengthens our confidence that the differences the inventors observe between the cell types originate from changes in the proteome and not different sample input. The inventors therefore performed a principal component analysis of the two cell types and observed a cell type specific separation via the first two components (Figure 10c). Of note, even though the inventors filtered for at least 70% quantitative data completeness, the cell type cluster density decreases the more analytical runs were accumulated. The inventors found that this is in part due to the reduced sample overlap introduced by stochastic precursor picking and elevated background signals as described earlier (Figure 9a-d). Consequently, the inventors strongly believe that the optimization of in-line, loss-less sample clean-up in conjunction with an efficient data independent acquisition (DIA) strategy will further improve our results.

Aiming at examining the cluster loadings in more detail, the inventors investigated top differentially expressed proteins between the two cell types (Figure 10c-d). Interestingly, one of the top hits in HeLa cells compared to HEK cells is the brain acid soluble protein 1 (BASP1), which is downregulated in most tumor cell lines except some cervical cancer lines (Figure 10d). In contrast to other cancer cell lines, the elevated levels of the tumor suppressor BASP1 in HeLa cells even promotes tumor growth [24]. Alongside BASP1, cross referencing of our top regulated proteins to normalized expression data obtained from the Human Protein Atlas [23] (http://www.proteinatlas.org) revealed strong agreement (i.e. TMSB10, FOLR1, TMSB4X, LGALS1, KRT7, SLC7A5, KRT8, PARP1, CD44, PGRMC1, BASP1). Following this, the inventors accurately represent quantitative differences between the two cell types and that our analysis distinguishes the two solely based on their proteome. Of note, using our experimental setup, the inventors can directly correlate changes in the proteome to the acquired image during cell sorting by the cellenONE^{®}. This allows to estimate if an expected or unexpected clustering behavior is a result of the respective proteome or can be traced back to the preparation and cellular morphology.

### Label-free single cell proteome acquisition with the sample collection apparatus

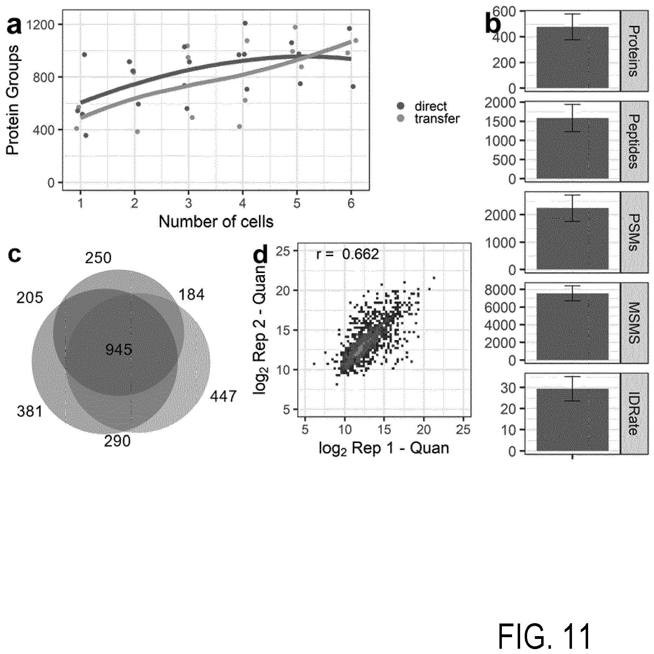

The inventors investigated how the multiplexed sample preparation workflow compares in the generation of label-free single cells. Label-free proteome analysis has several advantages over multiplexed sample workflows, like the direct MS1 based quantification, the possibility of highly confident feature matching between analytical runs and the reduced chemical noise introduced by the labeling [25,26]. The inventors therefore evaluated the sample collection apparatus protocol in the analysis of label-free single cell samples, using shorter gradients based on the vastly reduced sample input (i.e. 30 minutes compared to 60 minutes for TMT-labeled samples). This still drastically reduces the throughput of the acquired samples, however, the gradient length and overhead times between the samples is still subject to further improvement. First, the inventors processed increasing numbers of HeLa cells starting from only one up to 6 cells, either transferring the sample to a standard PP vial for injection or measuring directly via the proteoCHIP funnel part (Figure 7). As expected, the sample transfer results in slight peptide losses more prominent in the lower cell input samples compared to five cells and more (Figure 11a). Even though the samples are processed identically and transferred to a PEG pre-treated PP vial, the vessel exchange results on average in 30% decreased protein identifications for single cells. The inventors found that these differences are especially striking at such low input, as this readily declines to only 10% for two cells and merely 5% in the analysis of three cells (Figure 11a). This indicates that the direct connection and reduced sample manipulation enabled by the proteoCHIP is critical in the analysis of single cell proteomes.

The optimized label-free sample collection apparatus workflow reproducibly yields around 500 protein groups per single HeLa cell and 1.422 protein groups across all 30 single cell measurements. Interestingly, similarly to the TMT-labeled samples (Figure 9a-d), the unique peptide sequence overlap between three replicates is only around 50% (Figure 11c). Despite that, peptides that were identified across replicates positively correlated with a pearson correlation estimate of 0.662 (Figure 11d). The inventors found that this drastic reduction in replicate overlap again is mostly caused by the stochastic selection of precursors in DDA strategies. Even though label-free measurements now allow for FDR-controlled match between runs based on MS1 features [25], the inventors are confident that the transition to DIA measurements will improve replicate overlap and quantification correlation. Further, the inventors found that the fast duty cycles and the increased usage of the ion beam of the PASEF strategy on the timsTOF Pro will benefit our label-free single cell analysis [27]. Taken together, the inventors have successfully extended the sample processing capabilities of the proteoCHIP to label-free single cell samples at surprising sensitivity. However, the inventors hypothesize that the data reproducibility can be further advanced via specialized acquisition strategies.

In summary, the inventors demonstrate the improvement of single cell sample preparation using the sample collection apparatus in conjunction with a commercial single cell isolation and picoliter dispenser, e. g. the cellenONE^{®}. The proposed sample preparation workflow of single cells for MS-based analysis is highly adaptable and allows for the preparation of label-free or multiplexed single cells. The optimized protocol drastically reduces the digest volumes compared to previously published well-based techniques and is comparable to those successfully applied in nanoPOTS [1,10,14]. This not only limits chemical noise but as a result of the hexadecane layer covering the sample, the inventors achieve constant enzyme and chemical concentrations increasing efficiency of the sample preparation. Further, the specialized design of the proteoCHIP allows automatic pooling of multiplexed samples using a standard benchtop centrifuge, final sample collection in the proteoCHIP funnel part and direct interfacing with a standard autosampler for LC-MS/MS analysis. This semi-automated processing, pooling, and injecting eliminates error prone manual sample handling often resulting in peptide losses and additional variance.

The inventive efficient single cell sample preparation retains comparable protein identifications and improved S/N of single cell reporter ions even at reduced or eliminated carrier (Figure 8a-b) [8,10]. This not only allows increased throughput by labelling single cells with all available TMT reagents but also improves the confidence of identifying peptides stemming from the single cells and not the carrier [18]. The inventors further show that two highly similar human cell types can be differentiated based on their proteome using our platform (Figure 9c). The inventors are therefore confident that biologically similar cell types (e.g. originating from the same organ) can be classified and profiled using our workflow. The inventors, however, acknowledge that despite the good correlation of individual samples (Figures 8c-f) the correlation and replicate overlap between analytical runs is still subject to improvements (Figures 9a-d). Despite the suboptimal replicate correlation, the over 75% data completeness within one analytical run (Figures 9e-h) leaves the inventors confident that DIA workflows will further advance present results. The inventors propose that specialized DIA methods for the Orbitrap Exploris or diaPASEF on the timsTOF Pro will drive reproducibility at similar quantification accuracy. Further, the inventive optimized sample processing strategy in conjunction with the more sensitive, second generation timsTOF Pro will further increase identifications especially of label-free single cell samples [2].

Concluding, the miniaturized single cell proteomics sample preparation workflow with the novel sample collection apparatus utilizes standard chemicals for MS-based sample preparation. Employing a versatile picoliter dispensing robot, the cellenONE^{®}, the inventors have achieved efficient single cell proteomics sample preparation which can be readily adapted, addressing multiple shortcomings of previously-published label-free and multiplexed methods.

The features of the invention disclosed in the above description, the drawings and the claims can be of significance both individually as well as in combination or sub-combination for the realization of the invention in its various embodiments.

## Claims

1. Sample collection apparatus, being adapted for preparing a plurality of liquid samples for a sample processing, comprising
- a collection device comprising a plurality of collection vessels being adapted for accommodating the liquid samples and for providing the liquid samples for the sample processing, wherein
- the sample collection apparatus is shaped for positioning the collection device directly in a carousel of an autosampler apparatus, in particular a liquid chromatography autosampler apparatus.

2. Sample collection apparatus according to claim 1, further comprising
- a holder device being configured for holding the collection device during collecting the liquid samples and during providing the liquid samples for the sample processing, and
- the holder device is shaped for positioning the holder device with the collection device directly in the carousel of the autosampler apparatus.

3. Sample collection apparatus according to claim 2, wherein
- a bottom side of the holder device has an outer shape of a sample rack of the autosampler apparatus.

4. Sample collection apparatus according to one of the claims 2 to 3, wherein
- the holder device is made of a material with a thermal conductivity being matched to the thermal conductivity of a metal, in particular of aluminum or stainless steel.

5. Sample collection apparatus according to one of the claims 2 to 4, wherein
- the holder device has a substrate section being adapted for accommodating the collection device and a lid section being adapted for covering the collection device accommodated on the substrate section.

6. Sample collection apparatus according to one of the foregoing claims, wherein
- the sample preparing apparatus has at least two receptacles being adapted for receiving coupling elements of the autosampler apparatus

7. Sample collection apparatus according to one of the foregoing claims, wherein
- the collection device has an outer size of a standard microscopy glass slide or a microtiter plate.

8. Sample preparation apparatus, comprising
- a sample collection apparatus according to one of the foregoing claims, and
- an autosampler apparatus, in particular a liquid chromatography autosampler apparatus.

9. Sample collection method for preparing liquid samples for sample processing, in particular for liquid chromatography sample separation, comprising the steps of
- collecting the liquid samples with a collection device comprising a plurality of collection vessels each being adapted for accommodating one of the liquid samples and for providing the liquid samples for the sample processing, and
- positioning the collection device directly in a carousel of an autosampler apparatus, in particular a liquid chromatography autosampler apparatus.

10. Sample collection method according to claim 9, wherein
- the collection device is arranged on a holder device being configured for holding the collection device during collecting the liquid samples and during providing the liquid samples for the sample processing, and
- positioning the collection device comprises positioning the holder device directly in the carousel of the autosampler apparatus.

11. Sample collection method according to claim 10, wherein
- a temperature of the liquid samples is set by setting a temperature of the autosampler apparatus and tempering the collection device via the holder device.

12. Sample collection method according to one of the claims 9 to 11, wherein
- the collection device is covered with a lid section, and
- the liquid samples are taken by puncturing the lid section with an autosampler needle of the autosampler apparatus at a time of sample loading.

13. Sample collection method according to one of the claims 9 to 12, comprising a step of
- preloading the collection vessels of the collection device with at least one of an organic solution, in particular an oil, and an organic and/or aqueous solution for lysis and/or digestion steps.

14. Method of using a sample collection apparatus according to one of the claims 1 to 7 for preparing liquid samples before sample processing with a liquid chromatography autosampler apparatus, in particular for mass spectrometry analyses.
